# EUROPÄISCHE PATENTSCHRIFT

(11) **EP 1 576 038 B1**
(45) Veröffentlichungstag und Bekanntmachung des Hinweises auf die Patenterteilung: **23.06.2010**
(21) Anmeldenummer: 03780156.0
(22) Anmeldetag: 22.12.2003
(51) Int. Cl.: C08J 9/36, C08F 2/24, C08G 12/32, C08F 220/56

(54) **AUFGESCHÄUMTES MATERIAL UND HERSTELLVERFAHREN FÜR DAS AUFGESCHÄUMTE MATERIAL**
FOAMED MATERIAL AND METHOD FOR THE PRODUCTION OF SAID FOAMED MATERIAL
MATERIAU EXPANSE ET PROCEDE DE PRODUCTION DUDIT MATERIAU EXPANSE

(30) Priorität: 23.12.2002 DE 10260815
(43) Veröffentlichungstag der Anmeldung: 21.09.2005
(73) Patentinhaber: UNIVERSITÄT ZU KÖLN, 50923 Köln (DE)
(72) Erfinder: STREY, Reinhard, 50939 Köln (DE); SOTTMANN, Thomas, 51109 Köln (DE); SCHWAN, Michael, 51375 Leverkusen (DE)
(74) Vertreter: von Kreisler Selting Werner
(86) Internationale Anmeldenummer: PCT/EP2003/014750
(87) Internationale Veröffentlichungsnummer: WO 2004/058386

(56) Entgegenhaltungen:
- US-A- 3 959 197
- US-A- 5 086 085
- US-A- 5 840 820

## Beschreibung

Die Erfindung betrifft ein aufgeschäumtes Material und ein Verfahren zur Herstellung des aufgeschäumten Materials.

Aufgeschäumtes Material ist weithin bekannt. Grundsätzlich gibt es zwei Verfahren der Herstellung.

Im ersten Verfahren entsteht geschäumtes Polymeren-Material über das Prinzip der Keimbildung (Phasenübergang) von Treibmittel-Blasen in übersättigter Polymermatrix.

Die entstehende Blasenpopulation unterliegt den Gesetzen der Keimbildung, nach denen die Keimbildungsrate von der Übersättigung des Systems und einer zu überwindenden Keimbildungsschwelle (Aktivierungsenergie) abhängt. Des Weiteren haben die Dauer der Keimbildungsphase und die Geschwindigkeit des Blasenwachstums einen Einfluss auf den entstehenden Schaum. Um einer besonderen Forderung zu genügen, nämlich eine besonders hohe Anzahldichte an Blasen mit großer Homogenität zu erzeugen, sind sehr hohe Keimbildungsraten und somit große Übersättigungen notwendig. Die gewünschte Monodispersität der Blasen lässt sich nur durch eine kurze Keimbildungsphase und somit Blasenpopulationen gleichen Alters erreichen, was wiederum eine sehr hohe Keimbildungsrate erfordert, um die große Anzahl von Blasen innerhalb sehr kurzer Zeit entstehen zu lassen.

Soweit diese Prozesse thermodynamisch verstanden werden, hat die Erzeugung einer hohen Schaumblasendichte eine obere Grenze, so dass auf diesem Wege keine Schäume erzeugbar sind, die die zutreffende Bezeichnung Nano-Schaum (nano-foam) verdienen. Bei der Verwendung beispielsweise von CO₂ als Treibmittel entsteht im Verlauf des Blasenwachstums ein weiteres Problem. Die sinkende CO₂-Konzentration innerhalb des aushärtenden Polymers lässt die Glastemperatur steigen, wodurch ein Aushärten der Zellwände beschleunigt wird. Dies behindert zum einen die Diffusion von CO₂ in die Blasen und zum anderen die Expansion der Blasen. In Folge dessen bauen sich innerhalb der entstehenden Schaumstoffe hohe Drücke auf, die eine Instabilität der Zellwände zur Folge haben.

In einem anderen Verfahren wird geschäumtes Material ohne Keimbildung und Phasenübergang erzeugt. In der Matrix wird durch Einblasen von Treibmitteln oder durch einen mechanischen Mischvorgang eine porige Struktur erzeugt.

Es ist klar, dass das letzte Verfahren nicht geeignet ist, geschäumtes Material zu gewinnen, welches eine hohe und homogene Schaumblasendichte besitzt.

Verfahren der oben genannten Art sind zum Beispiel in den US Patenten 5,840,820, 5,086,085 und 3,959,197 offenbart.

Es ist die Aufgabe der Erfindung, ein Verfahren aufzuzeigen, aufgeschäumtes Material mit Schaumblasen in Nanogröße zu erzeugen, ohne dass die Energiebarriere, die üblicherweise bei Phasenumwandlungen und Keimbildungsprozessen auftritt, überwunden werden muss. Eine damit verbundene Aufgabe liegt darin, ein aufgeschäumtes Material kontrollierbar zu erzeugen, welches eine Anzahldichte von Schaumblasen zwischen 10¹² und 10¹⁸ pro cm³ sowie einen mittleren Durchmesser der Schaumblasen zwischen 10 nm und 10 µm hat.

Die Lösung wird in den für das Verfahren und für das Material formulierten Nebenansprüchen wiedergegeben. Weitergehende Ausgestaltungen des Verfahrens und das Materials sind in den jeweiligen Unteransprüchen zu finden.

Der Kem der Erfindung, ein aufgeschäumtes Material anzugeben, liegt in folgendem:
Das aufgeschäumte Material bestehend aus einem, die Matrix bildenden ersten Fluid und einem die Schaumblasen bildenden zweiten Fluid (wird auch als Treibmittel bezeichnet), wobei die Fluide nicht unbegrenzt mischbar sind. Ausgangssubstanzen des Materials sind mindestens ein erstes Fluid, mindestens ein zweites Fluid und ein Amphiphil. Amphiphile (Tenside) sind bekannt, sie haben mindestens einen polaren Kopf oder Block und mindestens eine unpolare Kette und/oder einen unpolaren Kopf oder Block, Bekannt ist die Bildung von mizellaren Ordnungstrukturen durch die supramolekulare Wechselwirkung der beteiligten Molekülverbände. Diese Wechselwirkung macht sich die Erfindung zunutze, wobei das erste Fluid in attraktive Wechselwirkung treten kann mit mindestens einem dem ersten Fluid zugeneigten ersten Block des amphiphilen Materials und das zweite Fluid in attraktive Wechselwirkung treten kann mit mindestens einem dem zweiten Fluid zugeneigten zweiten Block des amphiphilen Materials.

Das erste, beteiligte Fluid liegt unter den thermodynamischen Parametern der Herstellung im flüssigen Aggregatzustand vor, vorzugsweise in niedrigviskosem Zustand. Das zweite, beteiligte Fluid ist unter den thermodynamischen Parametern der Herstellung gasförmig. Das zweite Fluid ist aus dem gasförmigen Zustand in einen Zustand überführbar, in dem es eine Dichte hat, die derjenigen im flüssigen Aggregatzustand entspricht oder dieser nahekommt. Die Zustandsänderung ist also eine, bei der das Gas thermodynamisch in einen Zustand nahe dem kritischen Punkt oder über ihn hinaus in den superkritischen Zustand gebracht wird. Das zweite Fluid wird im ersten Fluid dispergiert durch die Bildung von Pools (vorzugsweise zu Mizellen), die durch Unterstützung des amphiphilen Materials entstehen, genauer gesagt durch die attraktive supramolekulare Wechselwirkung des ersten Fluids mit mindestens einem dem ersten Fluid zugeneigten ersten Block (oder Kopf) des amphiphilen Materials und durch die attraktive Wechselwirkung des zweiten Fluids mit mindestens einem dem zweiten Fluid zugeneigten zweiten Block (Kopf oder Kette) des amphiphilen Materials. Nach Änderung des Zustands des zweiten Fluids aus dem Zustand flüssigkeitsähnlicher Dichte in den Zustand gasförmiger Dichte, also durch Änderung der thermodynamischen Größen derart, dass der kritische Punkt unterschritten wird (Rückführung in den unterkritischen Zustand), sind die Pools zu Schaumblasen umgebildet, in denen das zweite Fluid nach Maßgabe der attraktiven supramolekularen Wechselwirkung nahezu vollständig enthalten ist.

Es muss keine Energiebarriere überwunden werden, noch müssen die Treibmittelmoleküle zu den wachsenden Blasen diffundieren. Die Abläufe sind in den Einzelschritten direkt reversibel, was bei thermodynamischen Vorgängen, in denen eine Aktivierungsschwelle (Aktivierungsenergie) überwunden werden muß, nicht der Fall ist.

Das Verfahren der Herstellung stellt sich entsprechend dar.

Vorzugsweise liegt die Schaumblasendichte im ersten Fluid in einem Bereich von 10¹² bis 10¹⁸ pro cm³ und die mittlere Schaumblasengröße ist kleiner als 10 µm. Das Gesamtvolumen der im ersten Fluid gebildeten Schaumblasen hat je nach Mischungsverhältnis mit dem zweiten Fluid einen Volumenanteil zwischen 10 und 99 %. Vorzugsweise entsteht geschlossenporiges, aufgeschäumtes Material, wobei durch weitere Verfahrensschritte oder durch geeignete Abwandlungen auch offenporiges Material herstellbar ist.

Als erstes Fluid wird mindestens ein Stoff aus einer Gruppe von polaren oder annähernd polaren Substanzen vorgeschlagen. Unter den thermischen Bedingungen der Herstellung sollte diese Substanz oder Substanzmischung im niedrigviskosen, vorzugsweise im flüssigen Zustand oder im Zustand oberhalb der Glastemperatur vorliegen. Die Stoffgruppe des ersten Fluids umfaßt insbesondere Wasser, kurzkettige Alkohole und Mischungen dieser Flüssigkeiten mit Glycerin oder mit Salzen. Die thermischen Bedingungen der Herstellung sind also nicht auf Umgebungstemperaturen beschränkt, sondern die Herstellung kann auch bei höheren Temperaturen vorgenommen und das hergestellte Material unter die Erstarrungstemperatur (Schmelzpunkt oder Glastemperatur) abgekühlt und verwendet werden, nachdem die Matrix erstarrt ist.

Vorzugsweise kann das erste Fluid mindestens eine polymerisierbare Substanz sein, oder das erste Fluid besteht aus einer Mischung, in der eine polymerisierbare Substanz enthalten ist. Die Verwendung mindestens einer polymerisierbaren Substanz kann entweder derart sein, dass diese Substanz während der Herstellung des geschäumten Materials im unpolymerisierten Zustand eingesetzt wird, und dass während oder am Ende des Herstellverfahrens die Polymerisation eingeleitet wird. Eine Alternative ist, wenn das erste Fluid, welches zum Teil oder als Ganzes polymerisierbar ist, als Feststoff bei Umgebungstemperaturen vorliegt, dass die Herstellung bei erhöhter Temperatur vorgenommen wird, bei der das erste Fluid geschmolzen oder aufgeweicht vorliegt. Thermodynamisch sollte also das erste Fluid im flüssigen Aggregatzustand oder im Zustand oberhalb des Glaspunkts vorliegen.

Als Monomere einer polymerisierbaren Substanz werden zum einen Acrylamid (polymerisiert zu Polyacrylamid) oder zum anderen Melamin (polymerisiert zu Melamin-Harz) vorgeschlagen.

Es wird weiterhin vorgeschlagen, zum Starten oder zur Kontrolle der Polymerisation mindestens ein Additiv einzusetzen. Ein Additiv kann beispielsweise ein Radikalstarter, eine Säure, eine Base oder ein Puffer sein.

Das zweite Fluid sollte aus einer Stoffgruppe von Kohlenwasserstoffen (Methan, Ethan usw.), Alkanolen, Fluorchlorkohlenwasserstoffen (FCKW), CO₂ ausgewählt werden.

Es wird amphiphiles Material eingesetzt, wobei jedes bekannte Amphiphil bezüglich der Materialkombination und/oder der gewünschten supramolekularen Wechselwirkung der beiden Fluide benutzbar ist. Die amphiphile Substanz sollte also mindestens einen dem ersten Fluid zugeneigten Block (Kopf oder Kette) A und mindestens einen dem zweiten Fluid zugeneigten Block (Kopf oder Kette) B haben. Es kommen also auch Amphiphile vom Typ A-B-A oder ähnliche Abwandlungen infrage.

Die Stoffgruppe der Amphiphile umfaßt mindestens nichtionische, ionische, amphotere Tenside, amphiphile Blockcopolymere, fluorierte Tenside, Silikontenside und/oder Cotenside; wobei auch Mischungen möglich sind. Als Tenside für als, zweites Fluid eingesetzte kurzkettige Alkane sind beispielsweise nichtionische n-Alkylpolyglycolether (CᵢEⱼ), n-Alkylphenolethoxylate oder n-Alkylpolyglycoside (CₙGₘ) bekannt.

Zu der Gruppe der kationischen Tenside gehört zum Beispiel Alkylammoniumbromide, zu den anionischen Tensiden gehören zum Beispiel das Tensid Natrium-bis(2-ethylhexyl)sulfosuccinat (AOT) und andere Alkylsulfate. Weiterhin können auch amphiphile Blockcopolymere des Typs Polyethylenpropylen-Polyethylenoxid (PEP-PEO), Polyethylenoxid-Polypropylenoxid-Polyethylenoxid (PEO-PPO-PEO, Pluronics), sowie ähnlich aufgebaute Polymere A-B oder A-B-A zur Stabilisation der Pools verwendet werden.

Für CO₂ -Pools können teilweise oder vollständig fluorierte Alkylethoxylate, Oligomere oder Polymere der Polydimethylsiloxan-Polyethylenoxide (PDMS-PEO) oder Polydimethylsiloxan-Polyethylenoxide-Polypropylenoxide (PDMS-PEO-PPO), sowie das anionische Perfluoropolyetherammoniumcarboxylat und teilweise oder vollständig fluorierte, amphiphile Fluoropolymere aufgebaut aus Fluoracrylat-Monomeren eingesetzt werden. Weiterhin sind zur Stabilisation der Pools einsetzbar: amphiphile Blockcopolymere des Typs Polybutylenoxid-Polyethylenoxid (PBO-PEO), Polyethylenoxid-Polypropylenoxid-Polyethylenoxid (PEO-PPO-PEO, Pluronics), sowie ähnlich aufgebaute Polymere.

Für FCKW-Pools können fluorierte oder teil-fluorierte Tenside verwendet werden.

Das zuvor gesagte, das geschäumte Material betreffende, läßt sich unmittelbar auf den Herstellprozeß übertragen. Die einzelnen Merkmale sind detailliert im entsprechenden Nebenanspruch und den zugehörigen Unteransprüchen formuliert.

Vorzugsweise soll der Verfahrensschritt des Überführens der Dichte des zweiten Fluids in den Zustand flüssigkeitsähnlicher Dichte darin bestehen, dass das zweite Fluid in einen überkritischen oder nahekritischen Zustand überführt und in diesem Zustand in das erste Fluid dispergiert wird.

Vorzugsweise soll dabei die Temperatur und/oder der Druck des zweiten Fluids auf eine Temperatur und einen Druck oberhalb der kritischen Temperatur und oberhalb des kritischen Drucks des zweiten Fluids angehoben werden.

Alternativ dazu kann der Verfahrensschritt des Überführens der Dichte des zweiten Fluids in den Zustand gasförmiger Dichte darin bestehen, dass der Druck auf eine unterhalb des kritischen Drucks liegende Größe abgesenkt wird.

Bei dem Verfahren kann vorzugsweise das erste Fluid aus mindestens einer polymerisierbaren Substanz bestehen. Als polymerisierbare Substanz kann mindestens ein Monomer, mindestens ein Prä-Polymer, mindestens ein Polymer ausgewählt werden. Es wird daher vorgeschlagen, als polymerisierbare Substanz ein Acrylamid oder ein Melamin einzusetzen.

Vorzugsweise kann im Verfahren mindestens ein Additiv zur Kontrolle der Polymerisation eingesetzt werden.

Weiterhin ist es von Vorteil, wenn zur Kontrolle der Grenzflächenspannung zwischen dem ersten und dem zweiten Fluid mindestens ein Additiv eingesetzt wird. Hierzu wäre beispielsweise ein Alkanol geeignet.

Zusätzlich kann im Verfahren mindestens ein Additiv zur Kontrolle der Blasenkoaleszenz eingesetzt werden. Als Stoff zur Kontrolle der Blasenkoaleszenz wäre beispielsweise ein Salz, ein Polymer oder ein Alkohol geeignet.

Grundlage der Erfindung ist also die Dispersion eines zweiten Fluids in Form von Pools in einer Matrix eines ersten Fluids. Unter Matrix wird eine Flüssigkeit variabler Viskosität bis hin zum glasartig erstarrten Polymer verstanden. Mit Pools wird die Ansammlung von Molekülen des zweiten Fluids in nano- oder mikrometergroßen Domänen (z.B. Tröpfchen, oder Mizellen) bezeichnet. Das zweite Fluid dient als Treibmittel.

In einem Reaktionsraum liegen das erste Fluid als Matrix und das zweite Fluid in Pools vor. Das zweite Fluid kann auch allmählich in den Reaktionsraum bei gleichbleibendem oder zunehmendem Druck hinzugegeben werden. Durch Druck- und/oder Temperaturänderung wird das zweite Fluid in einen nahe- oder überkritischen Zustand mit einer flüssigkeitsnahen Dichte überführt. Vorzugsweise werden die Substanzen bei dem Verfahren durch Scherung, Durchwirbeln oder Rühren vermischt. Somit liegt das zweite Fluid vollständig oder, soweit seine Löslichkeit begrenzt ist, nahezu vollständig in Pools vor, die im gesamten ersten Fluid nahezu gleichmäßig verteilt sind. Durch Druckentlastung kehrt das zweite Fluid in einen Zustand gasförmiger Dichte zurück, wobei die Pools zu Schaumblasen aufgebläht werden.

Das Verfahren soll noch in der Terminologie von Mikroemulsionen beschrieben werden. Die Mikroemulsion besteht aus mindestens einem ersten Fluid, mindestens einem zweiten Fluid und mindestens einem Amphiphil. Das zweite durch ein Amphiphil stabilisierte Fluid liegt in Form von Pools im ersten Fluid vor. Das zweite Fluid bildet geschwollene Mizellen. Der Fachmann spricht von Öl-in-Wasser-(O/W)-Mikroemulsionen. Bedingung des Verfahrens ist, dass die zweiten Fluide unter Normalbedingungen eine gasähnliche Dichte haben, während sie während des Herstellvorgangs unter Druck so stark komprimierbar sind, dass sie eine flüssigkeitsähnliche Dichte annehmen, und damit als Ölphase für Mikroemulsion einsetzbar werden. Das Amphiphil kann ein beliebiges geeignetes Tensid sein. Weitere stabilisierende oder kontrollierende Zusätze können - wie schon erwähnt - hinzugegeben werden. Der Fachmann kann die Aussagen leicht auf Systeme übertragen, die aus verschiedenen Verfahrenskomponenten zusammengesetzt sind. Insbesondere sollen diejenigen Fluide und amphiphilen Substanzen infrage kommen, die explizit in den Ansprüchen und in der Beschreibung angegeben sind.

Die Mikroemulsion wird durch Variation von Druck, Temperatur und/oder der Zusammensetzung so eingestellt, dass sich eine Öl-in-Wasser-(O/W)-Mikroemulsion einstellt. Die Bedingungen werden so gewählt, dass das zweite Fluid im überkritischen Zustand vorliegt oder sich nahe seinem kritischen Punkt befindet.

Auf diese Weise wird eine Vorlage für einen nanozellulären Schaum erhalten, in der eine hohe Anzahldichte der Schaumblasen durch die hohe Zahl der aus dem zweiten Fluid bestehenden, geschwollenen Pools vorhanden ist. Durch eine Expansion der Mikroemulsion erzielt man eine kontinuierliche Volumenzunahme der Pools. Aufgrund des überkritischen Zustandes ist keine Keimbildung zum Übergang von der flüssigen in die gasförmige Phase notwendig. Somit wird bei der Expansion von überkritischen Mikroemulsionen der als nachteilig betrachtete Mechanismus der Keimbildung und des Phasenübergangs vermieden. Die überkritischen Pools folgen einer Druckabsenkung instantan und kontinuierlich mit einer Verringerung ihrer Dichte und einer Zunahme ihres Volumens. Das Anschwellen der Pools führt zu einem kontinuierlichen Übergang von der Mikroemulsion zum Schaum, wobei die Geschwindigkeit durch die Druckentlastungsrate steuerbar ist. Diese Abläufe sind kinetisch reversible Vorgänge.

Eine O/W-Mikroemulsion mit einer Tröpfchenanzahl von bis zu 10¹⁶ cm⁻³ bietet eine ideale Vorlage für die gewünschte hohe Anzahldichte an Schaumblasen. Die als Öl-Phase eingesetzten Komponenten der Mikroemulsion dienen als Treibmittel für den Schäumprozess. Die zweiten Fluide werden unter Druck so stark komprimieren, dass sie flüssigkeitsähnliche Dichte annehmen, und damit als Ölphase für Mikroemulsion einsetzbar werden.

Das Volumen der entstehenden Schaumblasen wird primär durch den inhalt der überkritischen Pools im Zustand der flüssigkeitsähnlichen Dichte und den Druck- und Temperaturbedingungen vor und nach der Expansion bestimmt. Es tritt keine Verzögerung durch Diffusion in die entstehenden Schaumblasen auf. Dabei kann ein zusätzliches Anschwellen der Schaumblasen durch weitere in der wässrigen Mikroemulsionsphase gelöste, sekundäre Treibmittel erreicht werden.

### Vorteile des beschriebenen Verfahrens:

Die Anzahldichte der Schaumblasen ist über weite Bereiche durch die wohlbekannten, adjustierbare Parameter von Mikroemulsionen frei wählbar. Durch die Auswahl geeigneter zweiter Fluide und geeigneter Amphiphile oder Amphiphilgemische besteht große Flexibilität bei der Formulierung der aufzuschäumenden Mikroemulsion. Um speziell die Verwendung von CO₂ als zweites Fluid anzusprechen, besteht der Formulierung auch von CO₂-Systemen Mikroemulsions-Systemen nichts im Wege, da Amphiphile mit den benötigten Eigenschaften der CO₂-philie sowie der CO₂-phobie dem Fachmann bekannt sind und somit zur Verfügung stehen.

Dadurch, dass das zweite Fluid nahe- oder überkritisch ist, kann sich die flüssigkeitsnahe Dichte aller aus den Pools entwickelnden Schaumblasen kontinuierlich auf den äußeren Druck einstellen. Die Dichte befindet sich stets im oder nahe dem mechanischen Gleichgewicht.

Der Parameter Druck, der sich räumlich instantan und isotrop ausbreitet, und die gleichförmige Zusammensetzung der Mikroemulsion ermöglichen in Kombination die Herstellung von Bulkmaterialien mit räumlich sehr homogener Schaumblasenverteilung.

Es werden geringe Drücke und Druckdifferenzen aufgewendet und die Schaumblasen entstehen durch kontinuierliche, genau kontrollierbare Expansion. Insbesondere kann die Expansion sanft ausgeführt werden, um die Koaleszenz der Schaumblasen zu minimieren.

Der Parameter Temperatur ist, mit der Einschränkung, dass ihr Wert oberhalb oder nahe der kritischen Temperatur des Treibmittels liegen muss, in weiten Bereichen frei wählbar. Durch Mischung mehrerer als zweite Fluide infrage kommender Substanzen kann die kritische Temperatur der Mischung variiert und angepasst werden.

### Vorteile des Materials:

Das hergestellte aufgeschäumte Material hat Blasendurchmesser im Bereich der mittleren freien Weglänge der Gasmoleküle. In Bezug auf den technischen Einsatz von Schäumen bedeutet dies, dass diese Stoffgruppe eine sehr kleine Wärmeleitfähigkeit hat. Daher bietet sich eine Verwendung als verbesserte Wärmeisolation an.

Das aufgeschäumte Material kann vielfältig eingesetzt werden. Hier werden nur einige beispielhafte Verwendungen aufgezählt.

Der Schaum kann zur Bedeckung empfindlicher Oberflächen von Reaktionsbehältern oder der Oberflächen von elektronischen Mikrobausteinen eingesetzt werden, wodurch sich Oberflächen gegen aggressive Reaktionskomponenten schützen lassen. Weiterhin kann der Schaum bedingt durch seine große Oberfläche als effektives Feuerlöschmittel eingesetzt werden. Das geschäumte Material kann auch unter Druck in einem Behälter aufbewahrt werden und als Spray oder als Strahl auf eine Oberfläche abgeblasen werden.

Der hergestellte Schaum kann als schnell einsetzbares, schockabsorbierendes Material genutzt werden. Das Material hat aus physikalischen Gründen eine hohe schalldämmende Eigenschaft und kann dementsprechende Verwendung finden.

Als weitere Verwendung wird vorgeschlagen, das aufgeschäumte Material als Schmiermittel in Lagern einzusetzen, die unter hohem Druck laufen.

Das aufgeschäumte Material kann in freier Atmosphäre oder eingebracht in eine gegen die Atmosphäre abschirmende Verpackung eingesetzt werden. Als Verpackung eignet sich beispielweise eine Blisterverpackung.

Das erfinderische Verfahren wurde an verschiedenen Systemen und besonders detailliert an einer Mikroemulsion aus Wasser und als Treibmittel Ethan (im Volumenverhältnis 1:3) und dem nichtionischen Tensid Octaethylenglycolmonododecylether (C₁₂E₈) labormäßig untersucht und überprüft. Für die Untersuchungen wurden Drücke aufgebracht, die Werte größer als der kritische Druck des Ethans (49 bar) hatten. Es fand Druckentlastung auf Atmosphärendruck bei isothermen Laborbedingungen statt. Die gewählte Temperatur war größer als die kritische Temperatur des Ethans (32 °C); beispielsweise 50 °C.

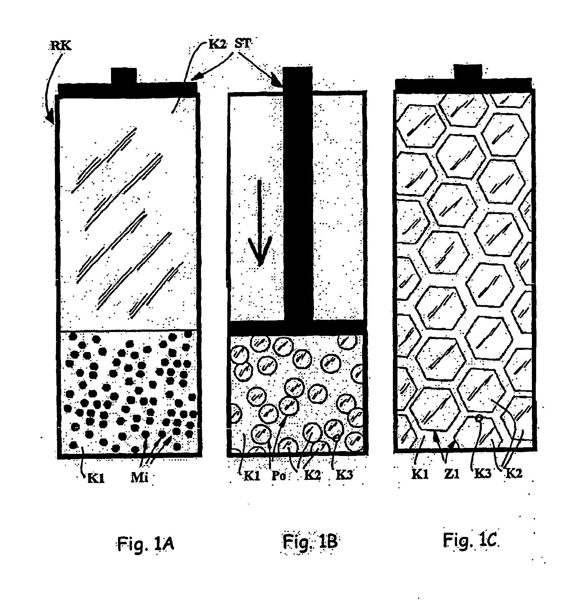

Ein Ausführungsbeispiel der Erfindung wird in der einzigen Figur dargestellt. Die Fig. 1 zeigt das Prinzip der Erfindung.

Zur Herstellung der Mikroemulsion von überkritischem Ethan (zweites Fluid K2) in Wasser (erstes Fluid K1) wird eine mizellare Wasser-C₁₂E₈-Tensidlösung K3 mit gasförmigem Ethan in Kontakt gebracht. In dem Ausführungsbeispiel in Fig. 1A sind bei einem Druck von p = 1 bar und T = 50 °C Mizellen Mi in Wasser K1 mit gasförmigem Ethan K2 in der Reaktionskammer RK überschichtet. In Fig. 1B wird über einen Stempel ST der Druck auf p = 100 bar erhöht. Durch Homogenisierung entsteht die Wasser-Ethan-C₁₂E₈-Mikroemulsion mit einem Volumenbruch Φₒ an flüssigem, überkritischem Ethan von Φₒ=0,01 in Wasser.

Mit der Vorgabe der Tröpfchendurchmesser der Ethan-Pools (Po) von 2r = 10 nm, ergibt sich der in der Wasser-C₁₂E₈-Ausgangslösung benötigte Tensidvolumenbruch zu Φₛ = 0,0075. Diese Mikroemulsion von überkritischem Ethan hat eine Anzahldichte von N = 2 · 10¹⁶ cm⁻³. Das darin mikroemulgierte Ethan hat eine Fluiddichte von p = 4 · 10² kg m⁻³.

Im Anschluss an die Mikroemulsionsbildung erfolgt eine kontinuierliche Expansion durch Druckabsenkung. In Fig. 1C ist der Zustand nach Ende der Expansion (Entlastung des Druck auf p = 1 bar) zu erkennen: Ein Nanoschaum liegt vor. Die Pools Po haben sich zu Schaumblasen Z1 vergrößert.

Es bilden sich während des Expansionsprozesses aus 1 cm³ Mikroemulsion 4 cm³ Schaum. Durch die Expansion auf p = 1 bar dehnen sich die Tröpfchen auf die Gasdichte p = 1,3 kg m⁻³ aus. Dabei entstehen in der Wasser-Ethan-C₁₂E₈ -Mischung Ethan-Gasbläschen von 2r = 60 nm Durchmesser. Die Gasbläschen bilden einen dichten Schaum, in dem das Gas einen Volumenbruch von Φ = 0,75 einnimmt. Aufgrund von Koaleszenz kann bei optimaler Absättigung der Grenzfläche die Anzahldichte auf N = 5 · 10¹⁵ cm⁻³ absinken. Die Größe der Blasen bleibt dennoch im Nanometer-Bereich.

Nach dem vorgestellten Verfahren ist es generell möglich, Dispersionen eines überkritischen zweiten Fluids mit nanometergroßen Tröpfchen und hoher Anzahldichte als Matrix eines Nanoschaums herzustellen.

## Patentansprüche

1. Aufgeschäumtes Material bestehend aus einem, die Matrix bildenden ersten Fluid (K1), einem die Schaumblasen (Z1) bildenden zweiten Fluid (K2), und einem amphiphilen Material (K3), wobei das erste Fluid (K1) in attraktive Wechselwirkung treten kann mit mindestens einem dem ersten Fluid zugeneigten ersten Block des amphiphilen Materials (K3) und das zweite Fluid (K2) in attraktive Wechselwirkung treten kann mit mindestens einem dem zweiten Fluid zugeneigten zweiten Block (B) des amphiphilen Materials (K3),
• wobei das erste Fluid (K1) aus einem im flüssigen Aggregatzustand, vorzugsweise in niedrig-viskosem Zustand vorliegenden Material besteht,
• wobei das zweite Fluid (K2) aus einem gasförmigen Material besteht, welches in einen nahekritischen oder überkritischen Zustand überführbar ist,
• wobei das zweite Fluid (K2) im ersten Fluid (K1) durch attraktive Wechselwirkung mit den jeweils zugeneigten Blöcken des amphiphilen Materials (K3) zur Bildung von Pools (Po) dispergiert ist, und
• dass durch Änderung des Zustands des zweiten Fluids (K2) aus dem zuvor eingestellten Zustand in den unterkritischen Zustand die Pools (Po) zu Schaumblasen (Z1) umgebildet sind, in denen das zweite Fluid (K2) enthalten ist.

2. Aufgeschäumtes Material nach Anspruch 1, **dadurch gekennzeichnet, dass** die Schaumblasendichte in Abhängigkeit des Mischungsverhältnisses zwischen den Fluiden (K1,K2) im ersten Fluid (K1) in einem Bereich von 10¹² bis 10¹⁸ pro cm³ liegt, die mittlere Schaumblasengröße kleiner als 10 µm ist und das Gesamtvolumen der im ersten Fluid (K1) gebildeten Schaumblasen (Z1) einen Volumenanteil zwischen 10 und 99 % hat.

3. Aufgeschäumtes Material nach einem der vorhergehenden Ansprüche, **dadurch gekennzeichnet, dass** das erste Fluid (K1) mindestens eine Substanz ist, die aus einer Stoffgruppe von polaren und/oder annähernd polaren Substanzen ausgewählt ist.

4. Aufgeschäumtes Material nach einem der vorhergehenden Ansprüche, **dadurch gekennzeichnet, dass** das erste Fluid (K1) aus mindestens einer polymerisierbaren Substanz besteht.

5. Aufgeschäumtes Material nach einem der vorhergehenden Ansprüche, **dadurch gekennzeichnet, dass** das erste Fluid (K1) aus einer Mischung besteht, die mindestens eine polymerisierbare Substanz enthält.

6. Aufgeschäumtes Material nach einem der Ansprüche 4 oder 5, **dadurch gekennzeichnet, dass** als Monomere der polymerisierbaren Substanz Acrylamid oder Melamin eingesetzt sind.

7. Aufgeschäumtes Material nach einem der vorhergehenden Ansprüche, **dadurch gekennzeichnet, dass** das zweite Fluid (K2) mindestens eine Substanz ist, die aus einer Stoffgruppe von Kohlenwasserstoffen, Alkanolen, Fluorchlorkohlenwasserstoffen und/oder CO₂ ausgewählt ist.

8. Aufgeschäumtes Material nach einem der vorhergehenden Ansprüche, **dadurch gekennzeichnet, dass** das amphiphile Material (K3) mindestens eine Substanz ist, die aus einer Stoffgruppe von nichtionischen, ionischen, amphoteren Tensiden, amphiphilen Blockcopolymeren, fluorierten Tensiden, Silikontensiden und/oder Cotensiden ausgewählt ist.

9. Aufgeschäumtes Material nach einem der Ansprüche 7 oder 8, **dadurch gekennzeichnet, dass** als erstes Fluid (K1) Wasser, dass als zweites Fluid (K2) Ethan und dass als amphiphiles Material (K3) Octaethylenglycolmonododecylether eingesetzt ist.

10. Verfahren zur Herstellung aufgeschäumten Materials unter Verwendung eines, die Matrix bildenden ersten Fluids (K1), eines die Schaumblasen (Z1) bildenden zweiten Fluids (K2), und eines amphiphilen Materials (K3), wobei das erste Fluid (K1) in attraktive Wechselwirkung treten kann mit mindestens einem dem ersten Fluid zugeneigten ersten Block des amphiphilen Materials (K3) und das zweite Fluid (K2) in attraktive Wechselwirkung treten kann mit mindestens einem dem zweiten Fluid zugeneigten zweiten Block (B) des amphiphilen Materials (K3),
• wobei das erste Fluid (K1) aus einem im flüssigen Aggregatzustand, vorzugsweise in niedrig-viskosem Zustand vorliegenden Material besteht,
• wobei das zweite Fluid (K2) aus einem gasförmigen Material besteht, welches in einen nahekritischen oder überkritischen Zustand überführbar ist,
mit folgenden in einem Reaktionsraum (RK) ausgeführten Verfahrensschritten
• das zweite Fluid (K2) wird durch Änderung seines Zustands aus dem unterkritischen Zustand in den nahekritischen oder überkritischen Zustand überführt,
• das zweite Fluid (K2) wird im ersten Fluid (K1) durch attraktive Wechselwirkung mit den jeweils zugeneigten Blöcken des amphiphilen Materials (K3) zur Bildung von Pools (Po) dispergiert, und
• das zweite Fluid (K2) wird durch Änderung des Zustands aus dem zuvor eingestellten Zustand in den unterkritischen Zustand überführt,
• wobei die Pools (Po) zu Schaumblasen (Z1) umgebildet werden, in denen das zweite Fluid (K2) enthalten ist.

11. Verfahren nach Anspruch 10, **dadurch gekennzeichnet, dass** der Verfahrensschritt des Überführens der Dichte des zweiten Fluids (K2) in den Zustand flüssigkeitsähnlicher Dichte darin besteht, dass das zweite Fluid (K2) in einen überkritischen oder nahekritischen Zustand überführt und in diesem Zustand in das erste Fluid (K1) dispergiert wird.

12. Verfahren nach Anspruch 11, **dadurch gekennzeichnet, dass** die Temperatur und/oder der Druck des zweiten Fluids (K2) auf eine Temperatur und/oder einen Druck oberhalb der kritischen Temperatur und/oder oberhalb des kritischen Drucks des zweiten Fluids (K2) angehoben wird.

13. Verfahren nach Anspruch 10, **dadurch gekennzeichnet, dass** der Verfahrensschritt des Überführens der Dichte des zweiten Fluids (K2) in den Zustand gasförmiger Dichte darin besteht, dass der Druck auf eine unterhalb des kritischen Drucks liegenden Größe und/oder die Temperatur auf eine unterhalb der kritischen Temperatur liegenden Größe abgesenkt wird.

14. Verfahren nach einem der Ansprüche 10 bis 13, **dadurch gekennzeichnet, dass** das Dispergieren des zweiten Fluids (K2) im ersten Fluid (K1) mit einer Maßnahme des Homogenisierens begleitet wird.

15. Verfahren nach einem der Ansprüche 10 bis 14, **dadurch gekennzeichnet, dass** das erste Fluid (K1) mindestens eine Substanz ist, die aus einer Stoffgruppe von polaren und/oder annähernd polaren Substanzen ausgewählt wird.

16. Verfahren nach einem der Ansprüche 10 bis 15, **dadurch gekennzeichnet, dass** als erstes Fluid (K1) mindestens eine polymerisierbare Substanz eingesetzt wird.

17. Verfahren nach einem der Ansprüche 10 bis 15, **dadurch gekennzeichnet, dass** als erstes Fluid (K1) eine Mischung eingesetzt wird, die mindestens eine polymerisierbare Substanz enthält.

18. Verfahren nach einem der Ansprüche 16 oder 17, **dadurch gekennzeichnet, dass** als Monomere der polymerisierbaren Substanz Acrylamid oder Melamin eingesetzt sind.

19. Verfahren nach einem der Ansprüche 16 bis 18, **dadurch gekennzeichnet, dass** mindestens ein Additiv zur Kontrolle der Polymerisation eingesetzt wird.

20. Verfahren nach einem der Ansprüche 10 bis 19, **dadurch gekennzeichnet, dass** als zweites Fluid (K2) mindestens eine Substanz eingesetzt wird, die aus einer Stoffgruppe von Kohlenwasserstoffen, Alkanolen, Fluorchlorkohlenwasserstoffen und/oder CO₂ ausgewählt wird.

21. Verfahren nach einem der Ansprüche 10 bis 20, **dadurch gekennzeichnet, dass** als amphiphiles Material (K3) mindestens eine Substanz eingesetzt wird, die aus einer Stoffgruppe von nichtionischen, ionischen, amphoteren Tensiden, amphiphilen Blockcopolymeren, fluorierten Tensiden, Silikontensiden und/oder Cotensiden ausgewählt wird.

22. Aufgeschäumtes Material nach einem der Ansprüche 20 oder 21, **dadurch gekennzeichnet, dass** als erstes Fluid (K1) Wasser, dass als zweites Fluid (K2) Ethan und dass als amphiphiles Material (K3) Octaethylenglycolmonododecylether ausgewählt wird.

23. Verfahren nach einem der Ansprüche 10 bis 22, **dadurch gekennzeichnet, dass** zur Kontrolle der Grenzflächenspannung zwischen dem ersten und dem zweiten Fluid mindestens ein Additiv eingesetzt wird.

24. Verfahren nach einem der Ansprüche 10 bis 23, **dadurch gekennzeichnet, dass** mindestens ein Additiv zur Kontrolle der Blasenkoaleszenz eingesetzt wird.

## Claims

1. A foamed material consisting of a first fluid (K1) forming the matrix, a second fluid (K2) forming the foam bubbles (Z1), and an amphiphilic material (K3), wherein said first fluid (K1) can undergo attractive interaction with at least one first block of the amphiphilic material (K3) facing towards the first fluid, and said second fluid (K2) can undergo attractive interaction with at least one second block (B) of the amphiphilic material (K3) facing towards the second fluid;
• wherein said first fluid (K1) consists of a material present in a liquid state of matter, preferably in a low-viscosity state;
• wherein said second fluid (K2) consists of a gaseous material which can be converted to a nearly-critical or supercritical state;
• wherein said second fluid (K2) is dispersed in said first fluid (K1) to form pools (Po) through attractive interaction with the respectively facing blocks of said amphiphilic material (K3); and
• wherein the pools (Po) have been transformed to foam bubbles (Z1) in which the second fluid (K2) is contained by changing the state of the second fluid (K2) from the previously adjusted state to the subcritical state.

2. The foamed material according to claim 1, **characterized in that** said foam bubble density in the first fluid (K1) is from 10¹² to 10¹⁸ per cm³, depending on the mixing ratio between the fluids (K1, K2), the average foam bubble size is smaller than 10 µm, and the total volume of the foam bubbles (Z1) formed in the first fluid (K1) has a volume proportion of from 10 to 99%.

3. The foamed material according to any of the preceding claims, **characterized in that** said first fluid (K1) is at least one substance selected from the group of polar and/or nearly polar substances.

4. The foamed material according to any of the preceding claims, **characterized in that** said first fluid (K1) consists of at least one polymerizable substance.

5. The foamed material according to any of the preceding claims, **characterized in that** said first fluid (K1) consists of a mixture which contains at least one polymerizable substance.

6. The foamed material according to either of claims 4 or 5, **characterized in that** acrylamide or melamine is employed as monomers of said polymerizable substance.

7. The foamed material according to any of the preceding claims, **characterized in that** said second fluid (K2) is at least one substance selected from the group of substances consisting of hydrocarbons, alkanols, fluorochlorohydrocarbons and/or CO₂.

8. The foamed material according to any of the preceding claims, **characterized in that** said amphiphilic material (K3) is at least one substance selected from the group of substances consisting of non-ionic, ionic and amphoteric surfactants, amphiphilic block copolymers, fluorinated surfactants, silicone surfactants and/or co-surfactants.

9. The foamed material according to either of claims 7 or 8, **characterized in that** water is employed as said first fluid (K1), ethane is employed as said second fluid (K2), and octaethylene glycol monododecyl ether is employed as said amphiphilic material (K3).

10. A process for the preparation of a foamed material using a first fluid (K1) forming the matrix, a second fluid (K2) forming the foam bubbles (Z1) and an amphiphilic material (K3), wherein said first fluid (K1) can undergo attractive interaction with at least one first block of the amphiphilic material (K3) facing towards the first fluid, and said second fluid (K2) can undergo attractive interaction with at least one second block (B) of the amphiphilic material (K3) facing towards the second fluid;
• wherein said first fluid (K1) consists of a material present in a liquid state of matter, preferably in a low-viscosity state;
• wherein said second fluid (K2) consists of a gaseous material which can be converted to a nearly-critical or supercritical state;
comprising the following process steps performed in a reaction chamber:
• said second fluid (K2) is converted by changing its state from the subcritical state to a nearly-critical or supercritical state;
• said second fluid (K2) is dispersed in said first fluid (K1) to form pools (Po) through attractive interaction with the respectively facing blocks of said amphiphilic material (K3); and
• said second fluid (K2) is converted by changing its state from the previously adjusted state to the subcritical state;
• wherein the pools (Po) are transformed to foam bubbles (Z1) in which the second fluid (K2) is contained.

11. The process according to claim 10, **characterized in that** the process step of converting the density of said second fluid (K2) to a state of liquid-like density consists in converting said second fluid (K2) to a supercritical or nearly critical state and, while in this state, dispersing it in the first fluid (K1).

12. The process according to claim 11, **characterized in that** the temperature and/or pressure of the second fluid (K2) is raised to a temperature and/or pressure above the critical temperature and/or above the critical pressure of the second fluid (K2).

13. The process according to claim 10, **characterized in that** the process step of converting the density of said second fluid (K2) to a state of gaseous density consists in lowering the pressure to a value below the critical pressure and/or lowering the temperature to a value below the critical temperature.

14. The process according to any of claims 10 to 13, **characterized in that** said dispersing of the second fluid (K2) in said first fluid (K1) is accompanied by a homogenization measure.

15. The process according to any of claims 10 to 14, **characterized in that** said first fluid (K1) is at least one substance selected from the group of polar and/or nearly polar substances.

16. The process according to any of claims 10 to 15, **characterized in that** at least one polymerizable substance is employed as said first fluid (K1).

17. The process according to any of claims 10 to 15, **characterized in that** a mixture which contains at least one polymerizable substance is employed as said first fluid (K1).

18. The process according to either of claims 16 or 17, **characterized in that** acrylamide or melamine is employed as monomers of said polymerizable substance.

19. The process according to any of claims 16 to 18, **characterized in that** at least one additive for controlling the polymerization is employed.

20. The process according to any of claims 10 to 19, **characterized in that** at least one substance selected from the group of substances consisting of hydrocarbons, alkanols, fluorochlorohydrocarbons and/or CO₂ is employed as said second fluid (K2).

21. The process according to any of claims 10 to 20, **characterized in that** at least one substance selected from the group of substances consisting of non-ionic, ionic and amphoteric surfactants, amphiphilic block copolymers, fluorinated surfactants, silicone surfactants and/or co-surfactants is employed as said amphiphilic material (K3).

22. The foamed material according to either of claims 20 or 21, **characterized in that** water is selected as said first fluid (K1), ethane is selected as said second fluid (K2), and octaethylene glycol monododecyl ether is selected as said amphiphilic material (K3).

23. The process according to any of claims 10 to 22, **characterized in that** at least one additive is employed for controlling the interfacial tension between said first and second fluids.

24. The process according to any of claims 10 to 23, **characterized in that** at least one additive is employed for controlling the coalescence of bubbles.

## Revendications

1. Matériau expansé constitué d'un premier fluide (K1) formant la matrice, d'un deuxième fluide (K2) formant les alvéoles (Z1) et d'un matériau amphiphile (K3), le premier fluide (K1) pouvant entrer en interaction par attraction avec au moins un premier bloc, incliné vers le premier fluide, du matériau amphiphile (K3), et le deuxième fluide pouvant entrer en interaction par attraction avec au moins un deuxième bloc (B), incliné vers le deuxième fluide, du matériau amphiphile (K3),
- le premier fluide (K1) étant constitué d'un matériau se présentant sous forme d'un agrégat liquide, de préférence à l'état faiblement visqueux,
- le deuxième fluide (K2) étant constitué d'un matériau gazeux, qui peut être converti pour prendre un état proche de l'état critique ou surcritique,
- le deuxième fluide (K2) étant dispersé dans le premier fluide (K1) par interaction par attraction avec les blocs inclinés correspondants du matériau amphiphile (K3), pour former des pools (Po), et
- par modification de l'état du deuxième fluide (K2), pour passer de l'état ajusté au préalable à l'état sous-critique, les pools (Po) étant transformés en alvéoles de mousse (Z1) qui contiennent le deuxième fluide (K2).

2. Matériau expansé selon la revendication 1, **caractérisé en ce que** la densité des alvéoles est, selon le rapport de mélange entre les fluides (K1, K2) dans le premier fluide (K1), comprise dans une plage de 10¹² à 10¹⁸ par cm³, la grosseur moyenne des alvéoles est inférieure à 10 µm, et le volume total des alvéoles (Z1) formés dans le premier fluide (K1) représente un pourcentage volumique compris entre 10 et 99 %.

3. Matériau expansé selon l'une des revendications précédentes, **caractérisé en ce que** le premier fluide (K1) est au moins une substance qui est choisie dans un groupe de substances comprenant des substances polaires et/ou approximativement polaires.

4. Matériau expansé selon l'une des revendications précédentes, **caractérisé en ce que** le premier fluide (K1) est constitué d'au moins une substance polymérisable.

5. Matériau expansé selon l'une des revendications précédentes, **caractérisé en ce que** le premier fluide (K1) est constitué d'un mélange qui contient au moins une substance polymérisable.

6. Matériau expansé selon la revendication 4 ou 5, **caractérisé en ce qu'**on utilise en tant que monomères de la substance polymérisable l'acrylamide ou la mélamine.

7. Matériau expansé selon l'une des revendications précédentes, **caractérisé en ce que** le deuxième fluide (K2) est au moins une substance qui est choisie dans le groupe de substances consistant en hydrocarbures, en alcanols, en hydrocarbures fluorochlorés et/ou CO₂.

8. Matériau expansé selon l'une des revendications précédentes, **caractérisé en ce que** le matériau amphiphile (K3) est au moins une substance qui est choisie dans un groupe de substances consistant en tensioactifs non ioniques, ioniques, amphotères, en copolymères séquencés amphiphiles, en tensioactifs fluorés, en tensioactifs de type silicone et/ou en co-tensioactifs,

9. Matériau expansé selon la revendication 7 ou 8, **caractérisé en ce qu'**on utilise de l'eau en tant que premier fluide (K1), de l'éthane en tant que deuxième fluide (K2), et l'éther monododécylique d'octaéthylèneglycol en tant que matériau amphiphile (K3).

10. Procédé de fabrication d'un matériau expansé par utilisation d'un premier fluide (K1) formant la matrice, d'un deuxième fluide (K2) formant les alvéoles (Z1) et d'un matériau amphiphile (K3), le premier fluide (K1) pouvant entrer en interaction par attraction avec au moins un premier bloc, incliné vers le premier fluide, du matériau amphiphile (K3), et le deuxième fluide (K2) pouvant entrer en interaction par attraction avec au moins un deuxième bloc (B), incliné vers le deuxième fluide, du matériau amphiphile (K3),
- le premier fluide (K1) étant constitué d'un matériau se présentant sous forme d'un agrégat liquide, de préférence à l'état faiblement visqueux,
- le deuxième fluide (K2) étant constitué d'un matériau gazeux, qui peut être converti pour prendre un état proche de l'état critique ou surcritique,
comportant les étapes suivantes, mises en oeuvre dans un compartiment de réaction (RK) :
- le deuxième fluide (K2) est, par changement de son état, converti de l'état sous-critique à l'état proche de l'état critique ou surcritique,
- le deuxième fluide (K2) est dispersé dans le premier fluide (K1) par interaction par attraction avec les blocs inclinés correspondants du matériau amphiphile (K3), pour former des pools (Po), et
- le deuxième fluide (K2) est, par modification de son état, converti de l'état précédemment ajusté à l'état sous-critique,
- les pools (Po) étant convertis en alvéoles (Z1) qui contiennent le deuxième fluide (K2).

11. Procédé selon la revendication 10, **caractérisé en ce que** l'étape de conversion de la densité du deuxième fluide (K2) à l'état de densité proche de celle d'un liquide consiste à convertir le deuxième fluide (K2) pour le mettre dans un état surcritique ou proche de l'état critique, et à le disperser dans cet état dans le premier fluide (K1).

12. Procédé selon la revendication 11, **caractérisé en ce que** la température et/ou la pression du deuxième fluide (K2) sont augmentées à une température et/ou à une pression supérieures à la température critique et/ou à la pression critique du deuxième fluide (K2).

13. Procédé selon la revendication 10, **caractérisé en ce que** l'étape de conversion de la densité du deuxième fluide (K2) à l'état de densité gazeuse consiste à abaisser la pression à une valeur inférieure à la pression critique et/ou la température à une valeur inférieure à la température critique.

14. Procédé selon l'une des revendications 10 à 13, **caractérisé en ce que** l'opération de dispersion du deuxième fluide (K2) dans le premier fluide (K1) s'accompagne d'une opération d'homogénéisation.

15. Procédé selon l'une des revendications 10 à 14, **caractérisé en ce que** le premier fluide (K1) est au moins une substance qui est choisie dans le groupe de substances consistant en substances polaires et/ou approximativement polaires.

16. Procédé selon l'une des revendications 10 à 15, **caractérisé en ce qu'**on utilise au moins une substance polymérisable en tant que premier fluide (K1).

17. Procédé selon l'une des revendications 10 à 15, **caractérisé en ce qu'**on utilise en tant que premier fluide (K1) un mélange qui contient au moins une substance polymérisable.

18. Procédé selon l'une des revendications 16 ou 17, **caractérisé en ce qu'**on utilise de l'acrylamide ou la mélamine en tant que monomères de la substance polymérisable.

19. Procédé selon l'une des revendications 16 à 18, **caractérisé en ce qu'**on utilise au moins un additif pour contrôler la polymérisation.

20. Procédé selon l'une des revendications 10 à 19, **caractérisé en ce qu'**on utilise en tant que deuxième fluide (K2) au moins une substance qui est choisie dans un groupe de substances consistant en hydrocarbures, en alcanols, en hydrocarbures fluorochlorés et/ou CO₂.

21. Procédé selon l'une des revendications 10 à 20, **caractérisé en ce qu'**on utilise en tant que matériau amphiphile (K3) au moins une substance qui est choisie dans le groupe de substances consistant en tensioactifs non ioniques, ioniques, amphotères, en copolymères séquencés amphiphiles, en tensioactifs fluorés, en tensioactifs de type silicone et/ou en co-tensioactifs.

22. Matériau expansé selon la revendication 20 ou 21, **caractérisé en ce qu'**on choisit l'eau en tant que premier fluide (K1), l'éthane en tant que deuxième fluide (K2) et l'éther monododécylique d'octaéthylèneglycol en tant que matériau amphiphile (K3).

23. Procédé selon l'une des revendications 10 à 22, **caractérisé en ce qu'**on utilise au moins un additif pour contrôler la tension interfaciale entre le premier et le deuxième fluides.

24. Procédé selon l'une des revendications 10 à 23, **caractérisé en ce qu'**on utilise au moins un additif pour contrôler la coalescence des alvéoles.
